# EUROPEAN PATENT SPECIFICATION

(11) **EP 3 424 769 B1**
(45) Date of publication and mention of the grant of the patent: **21.07.2021**
(21) Application number: 17773329.2
(22) Date of filing: 31.03.2017
(51) Int. Cl.: B60L 7/00

(54) **CONTROL METHOD AND BRAKING DEVICE**
STEUERUNGSVERFAHREN UND BREMSVORRICHTUNG
PROCÉDÉ DE COMMANDE ET DISPOSITIF DE FREINAGE

(30) Priority: 01.04.2016 CN 201610204341; 15.07.2016 CN 201620752059 U
(43) Date of publication of application: 09.01.2019
(73) Proprietor: Ninebot (Beijing) Tech Co., Ltd., Beijing 100192 (CN)
(72) Inventor: LUO, Jie, Beijing 100192 (CN); CHEN, Zhongyuan, Beijing 100192 (CN); WANG, Ye, Beijing 100192 (CN); WANG, Fengxin, Beijing 100192 (CN); ZHU, Haibo, Beijing 100192 (CN); MAO, Weifeng, Beijing 100192 (CN)
(74) Representative: Regimbeau
(86) International application number: PCT/CN2017/079146
(87) International publication number: WO 2017/167300

(56) References cited:
- EP-A1- 2 423 032
- CN-A- 102 616 146
- CN-A- 103 171 543
- CN-A- 103 171 543
- CN-A- 104 149 633
- CN-A- 104 875 839
- CN-C- 1 026 935
- CN-U- 201 656 888
- CN-U- 201 712 751
- CN-U- 206 049 945
- CN-Y- 201 086 643
- CN-Y- 201 120 853
- JP-A- 2011 126 426
- US-A- 4 221 275
- US-A1- 2010 252 345
- US-A1- 2012 138 375
- US-B1- 6 347 681

## Description

### CROSS REFERENCE TO RELATED APPLICATIONS

This application is based on, and claims benefit of priority to, Chinese Applications No. 201610204341.X filed on April 01, 2016 and No. 201620752059.0 filed on July 15, 2016.

### TECHNICAL FIELD

The present disclosure relates to control technology, and in particular to a controlling method and a braking device.

### BACKGROUND

An electric car finds wide use due to environment friendliness and convenience thereof. There are various kinds of electric cars, such as an electric bicycle, an electric tricycle, an electric four-wheeler, etc. Braking performance of an electric car is a key factor considered by a user. Good braking performance may guarantee user safety.

An existing electric car brakes as follows. When it is detected during a ride that a braking crank has been pressed, power supply of a motor may be cut off. In this case, braking is implemented completely by a mechanical structure. Such a braking mode provides a weak braking strength, which leads to a long braking distance. In this case, a dangerous accident tends to happen. In addition, a conventional electric braking crank, limited by an internal structure thereof, may provide, during braking, a controller with but a simple signal, such that the controller may control a braking part to output but a constant electronic braking force, in which case a braking force may be weakened greatly.

EP 2 423 032 A1 seems to disclose a bicycle regenerative brake control device (74), wherein a first displacement amount detecting part (53f) is to detect a first displacement amount of a first brake system (117f); a second displacement amount detecting part (53r) is to detect a second displacement amount of a second brake system (117f); a first control part (75) is to control a motor (60) using a first control process in response to the first and second displacement amounts of the first and second brake systems (117f, 117r) such that the first control part (75) generates a first regenerative braking force that corresponds with braking information obtained from the first displacement amount and the second displacement amount.

CN 104 875 839 A seems to disclose an electromagnetic brake, where a brake handle rotates around a brake handle rotating shaft mounted on a handlebar; of rotation of the brake handle, front-section free travel corresponds to an electromagnetic brake and rear-section mechanical brake travel corresponds to a mechanical brake; an angle sensor on the brake handle detects the rotation angle of the brake handle and sends an angle signal to an electromagnetic brake mechanism to output corresponding braking force; during braking, the motor is converted into a generator to charge a battery.

US 2012/0138375 A1 seems to disclose a regenerative braking system for a vehicle, where a combination regenerative braking and reverse switch is operable between at least a regenerative braking mode and a reverse mode; a brake actuation device is disposed outside of a handlebar for movement by a user; a brake actuation device sensor assembly is operatively coupled to the brake actuation device; a regenerative device is associated with a battery and at least one wheel for generating an electrical current by decelerating the wheel; one or more controllers is coupled to the brake actuation device sensor assembly, the battery, and the combination regenerative braking and reverse switch; in the regenerative braking mode the one or more controllers cause the regenerative device to decelerate the vehicle and charge the battery and in the reverse mode the one or more controllers control the electric motor to drive the at least one wheel in reverse.

CN 103 171 543 A seems to disclose an electronic brake system of a motor-driven cycling vehicle, wherein each detection element detects the operation of a corresponding brake crank; an electronic control unit is connected with each detection element and a motor to control graded brake of the motor based on output from each detection element.

US 2010/0252345 A1 seems to disclose a regenerative braking device, where a braking mechanism is to apply a braking force to a wheel, a brake operation section is to generate a brake operation amount, a brake operation amount transmission section is to transmit the brake operation amount to the braking mechanism, a brake operation force sensor is to detect a brake operation force, a drive is to apply a drive force to the wheel and apply, at an operation time of the brake operation section, a regenerative braking force according to the brake operation force to the wheel, and a reaction force generator is to apply a brake operation reaction force in accordance with a regeneration amount to the brake operation amount transmission section.

JP 2011-126426 A seems to disclose an electrically power-assisted bicycle enabling the easy and accurate adjustment of the pull (stroke) of a brake lever capable of stopping the generation of an auxiliary drive force to well stop the generation and apply the auxiliary drive force; a brake device 7 includes a brake body and a brake switch 22 selected in connection with the operation of the brake lever 20; a switch select position B where the brake switch 22 is turned on or off is set within the range S1 of the play between the open position A at which the brake lever 20 is not operated and the operation start position C at which the brake body is started to operate; when the brake switch 22 is turned on, an auxiliary drive force application function is stopped, and the brake lever 20 is operated from the open position A to the switch select position B; when the brake switch 22 is moved from off to on, the brightness of a battery remaining amount indication lamp and a mode indication lamp is increased.

US 6 347 681 B1 seems to disclose an electric scooter having batteries concealed below the standing platform in a multipurpose battery pan, an anti-lock brake, a dual suspension, a stow and carry feature, integrated electronics including brake control, throttle control, safety measures and theft protection; the dual suspension scooter includes a chassis; a steering column; a front wheel rotatably mounted on a front axle assembly; a rear wheel rotatably mounted on a rear axle assembly; a front cantilevered suspension mechanism mounted between the steering column and the front axle assembly; and a rear suspension mechanism mounted between the rear end of the chassis and the rear axle assembly.

### SUMMARY

Embodiments herein provide a controlling method, mobile equipment, a braking crank device, and a braking device.

The features of the method and device according to the subject disclosure are defined in the independent claims, and the preferable features according to the subject invention are defined in the dependent claims.

With a technical solution according to at least one embodiment herein, a braking device includes a braking crank device, a controller, and a braking part,
The braking crank device includes a braking crank case, a braking crank installed on the braking crank case, and a braking strength detecting device set inside the braking crank case.

The braking strength detecting device is arranged for generating, in response to a movement of a handle of the braking crank during braking, a signal of a braking strength corresponding to the movement, that is, a distance by which the handle of the braking crank has moved, and outputting the signal of the braking strength to the controller.

The controller is arranged for: generating, according to the signal of the braking strength, a first control signal, and controlling, according to the first control signal, electric braking on a driving part by the braking part.

The driving part is a motor of mobile equipment.

The braking part is arranged for braking the mobile equipment by short circuiting a winding of the motor intermittently in a duration determined by the controller according to the signal of the braking strength corresponding to the movement.

With a technical solution according to at least one embodiment herein, the braking strength detecting device is a Hall element. The braking crank device further includes a magnet.

The magnet is arranged for moving with displacement of the handle of the braking crank during braking.

The Hall element is arranged for: detecting strength of a magnetic field generated by the magnet during movement, and generating, according to the strength of the magnetic field detected, the signal of the braking strength corresponding to the movement.

With a technical solution according to at least one embodiment herein, the magnet is set on an extending part integral to the handle.

The extending part is set with a first hole for connection. The braking crank case is set with a second hole for connection corresponding to the first hole for connection.

A braking crank shaft is arranged for installing the braking crank on the braking crank case by passing through the first hole for connection and the second hole for connection.

With a technical solution according to at least one embodiment herein, the braking crank case is set with a Hall bas. The Hall element is secured on the Hall base. The Hall element is arranged for not moving with the displacement of the handle of the braking crank.

With a technical solution according to at least one embodiment herein, the signal of the braking strength is arranged for instructing to stop outputting a driving force that drives the mobile equipment.

With a technical solution according to at least one embodiment herein, the mobile equipment includes a braking device herein.

With a technical solution according to at least one embodiment herein, a controlling method applies to mobile equipment having a first braking part and a second braking part. The controlling method includes:
acquiring a first operation; determining, according to the first operation, a braking strategy;
determining according to the braking strategy, a first parameter corresponding to the first braking part and a second parameter corresponding to the second braking part;
controlling, according to the first parameter, first braking on the mobile equipment by the first braking part;
generating a control signal corresponding to the second parameter; and controlling, according to the control signal, second braking on the mobile equipment by the second braking part.

The first braking part is a mechanical brake.

The first parameter is for adjusting a mechanical structure of the first braking part.

The first parameter indicates a braking strength of the first braking part.

The second braking part is an electric brake.

The second parameter is a circuit parameter for adjusting the second braking part.

The second parameter indicates a braking strength of the second braking part.

A driving part of the mobile equipment is a motor.

The second braking part is arranged for braking the mobile equipment by short circuiting a winding of the motor intermittently in a duration determined based on the second parameter.

With a technical solution according to at least one embodiment herein, the first braking part is connected to a moving structure. The mobile equipment further includes a sensor for detecting a course of the moving structure.

The acquiring the first operation; determining, according to the first operation, the braking strategy includes:
in response to acquiring the first operation, detecting, using the sensor, a course of the moving structure corresponding to the first operation; and
determining, according to the course, the braking strategy.

With a technical solution according to at least one embodiment herein, the braking strategy includes:
in response to the course being within a first range, setting both the first parameter and the second parameter to zero;
in response to the course being within a second range, setting the first parameter to be greater than zero and the second parameter to zero; or setting the first parameter to zero and the second parameter to be greater than zero; and / or
in response to the course being within a third range, setting both the first parameter and the second parameter to be greater than zero.

The course within the first range is less than the course within the second range. The course within the second range is less than the course within the third range.

With a technical solution according to at least one embodiment herein, the braking strategy includes:
in response to the course being within a fourth range, setting both the first parameter and the second parameter to zero; and / or
in response to the course being within a fifth range, setting both the first parameter and the second parameter to be greater than zero.

The course within the fourth range is less than the course within the fifth range.

With a technical solution according to at least one embodiment herein, the braking strategy includes:
in response to the course being within a sixth range, setting the first parameter to be greater than zero and the second parameter to zero; or setting the first parameter to zero and the second parameter to be greater than zero; and / or
in response to the course being within a seventh range, setting both the first parameter and the second parameter to be greater than zero.

The course within the sixth range is less than the course within the seventh range.

With a technical solution according to at least one embodiment herein, the braking strategy further includes:
in response to the first parameter being greater than zero, increasing the first parameter as the course increases; and / or
in response to the second parameter being greater than zero, increasing the second parameter as the course increases.

With a technical solution according to at least one embodiment herein, the controlling, according to the control signal, second braking on the mobile equipment by the second braking part includes:
controlling the second braking part to determine, according to the control signal, a locking duration and a driving duration of the driving part within a period of time pre-determined;
controlling the driving part to stop driving within the locking duration.

### BRIEF DESCRIPTION OF THE DRAWINGS

FIG. 1 is a flowchart of a controlling method according to an embodiment herein.
FIG. 2 is a flowchart of a controlling method according to an embodiment herein.
FIG. 3 is a flowchart of a controlling method according to an embodiment herein.
FIG. 4 is a diagram of an entity of mobile equipment according to an embodiment herein.
FIG. 5 is a diagram of a course of a moving part according to an embodiment herein.
FIG. 6 is a diagram of a structure of mobile equipment according to an embodiment herein.
FIG. 7 is a diagram of a structure of mobile equipment according to an embodiment herein.
FIG. 8 is a diagram of a structure of a braking crank device according to an embodiment herein.
FIG. 9 is an exploded view of a structure of a braking crank device according to an embodiment herein.
FIG. 10 is a diagram of a structure of a braking device according to an embodiment herein.

### DETAILED DESCRIPTION

Embodiments herein are elaborated below with reference to the drawings to allow a more thorough understanding of a feature and technical content of an embodiment herein. The drawings herein are but for reference and explanation, and are not intended to limit an embodiment herein.

Each embodiment or example described in the detailed description includes the feature that the mobile equipment is braked by short circuiting a winding of the motor intermittently in a duration determined by the controller according to the signal of the braking strength corresponding to the movement of the handle of the braking crank, or that the mobile equipment is braked by short circuiting a winding of the motor intermittently in a duration determined based on the braking strength of the second braking part which is an electric brake.

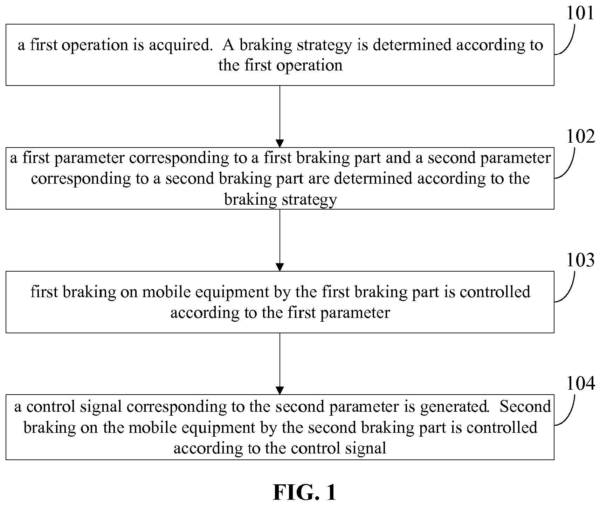

FIG. 1 is a flowchart of a controlling method according to an embodiment herein. The controlling method applies to mobile equipment having a first braking part and a second braking part. As shown in FIG. 1, the controlling method includes steps as follows.

In step 101, a first operation is acquired. A braking strategy is determined according to the first operation.

The mobile equipment may be an electric car. The electric car may be an electric scooter, an electric bicycle, an electric tricycle, an electric four-wheeler, etc.

The mobile equipment has a first braking part and a second braking part. The first braking part brakes through a mechanical structure. The second braking part brakes through a circuit structure. Accordingly, the first braking part is also known as a mechanical brake. The second braking part is also known as an electric brake.

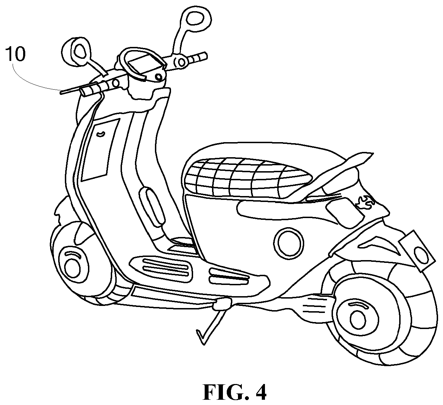

The first operation may be triggered by a user. The user may perform the first operation on a mechanical control of the mobile equipment, such that a structure of the mechanical control is changed. Referring to FIG. 4, the mobile equipment may be an electric bicycle. A braking crank of the electric bicycle may be the mechanical control. The user may trigger the first operation by clenching the braking crank of the electric bicycle. The mechanical control may be connected to the first braking part through a mechanical structure. A sensor for detecting a clenching course of the mechanical structure is provided on the mechanical control. The sensor may be connected to the second braking part through a circuit structure. In an embodiment herein, the user may perform the first operation on an electronic control of the mobile equipment. The electronic control may be connected to the first braking part through an electric structure. The electronic control may be connected to the second braking part through a circuit structure.

Having acquired the first operation, the mobile equipment determines the braking strategy corresponding to the first operation. The first braking part and the second braking part brake according to the braking strategy. With the braking strategy, a braking strength is enhanced by using both the first braking part and the second braking part.

In step 102, a first parameter corresponding to a first braking part and a second parameter corresponding to a second braking part are determined according to the braking strategy.

With the braking strategy, braking strengths of the first braking part and the second braking part are regulated flexibly. The braking strength of the first braking part is determined through the first parameter. The braking strength of the second braking part is determined through the second parameter. The control strategy herein includes information on at least a first parameter and a second parameter. The first parameter corresponding to the first braking part and the second parameter corresponding to the second braking part is determined according to the braking strategy.

As the first braking part brakes through a mechanical structure, the first parameter is a parameter for adjusting the mechanical structure of the first braking part. For example, the first braking part is a damping part. The damping part may be set near a wheel. When the damping part is pressed against the wheel, the damping part impedes the wheel's movement, thereby braking the mobile equipment. The first parameter may be closeness or tightness between the damping part and the wheel, i.e., how close or tight the damping part is pressed against the wheel. The greater the closeness / tightness, i.e., the closer / tighter the damping part is pressed against the wheel, the stronger a braking force is. The less the closeness / tightness, the weaker the braking force is. When the damping part is not pressed against the wheel, the braking strength is zero.

As the second braking part brakes through a circuit structure, the second parameter is a circuit parameter for adjusting the second braking part. The second braking part per se may be the circuit structure. A driving part of the mobile equipment is a motor. Rotation of the motor drives a wheel of the mobile equipment, thereby driving the mobile equipment. The second braking part brakes the mobile equipment as follows. An electric current is applied to the motor (in a duration determined based on the second parameter), to short circuit a winding of the motor intermittently. When the winding of the motor is short circuited intermittently, rotation of the motor is stopped, such that no power is provided to the wheel, thereby braking the mobile equipment.

In step 103, first braking on mobile equipment by the first braking part is controlled according to the first parameter.

The first parameter is for adjusting the mechanical structure of the first braking part. The mobile equipment is braked by adjusting the mechanical structure of the first braking part according to the first parameter.

Referring to FIG. 4, the mobile equipment may be an electric bicycle. The user may trigger the first braking by the first braking part by clenching a braking crank of the electric bicycle. The braking crank may apply the first braking on the mobile equipment by tightening the first braking part through a brake line. The first braking part may be a damping part. The damping part may be set near a wheel. When the damping part is pressed against the wheel, the damping part impedes the wheel's movement, thereby braking the mobile equipment.

In step 104, a control signal corresponding to the second parameter is generated. Second braking on the mobile equipment by the second braking part is controlled according to the control signal.

The second parameter is a circuit parameter for adjusting the second braking part. The mobile equipment is braked by adjusting a circuit parameter of the second braking part according to the second parameter.

A driving part of the mobile equipment is a motor. Rotation of the motor drives a wheel of the mobile equipment, thereby driving the mobile equipment. The second braking part brakes the mobile equipment as follows. The control signal corresponding to the second parameter is generated. The control signal is sent to the motor, such that an electric current corresponding to the control signal is applied to the motor (in a duration determined based on the second parameter), to short circuit a winding of the motor intermittently. When the winding of the motor is short circuited intermittently, rotation of the motor is stopped, such that no power is provided to the wheel, thereby braking the mobile equipment.

The second braking part may determine, according to the control signal, a locking duration and a driving duration of a driving part within a period of time pre-determined. The second braking part may control the driving part to stop driving within the locking duration. The driving part is a motor. A three-phase circuit or a two-phase circuit of the motor is short circuited within the locking duration to stop driving.

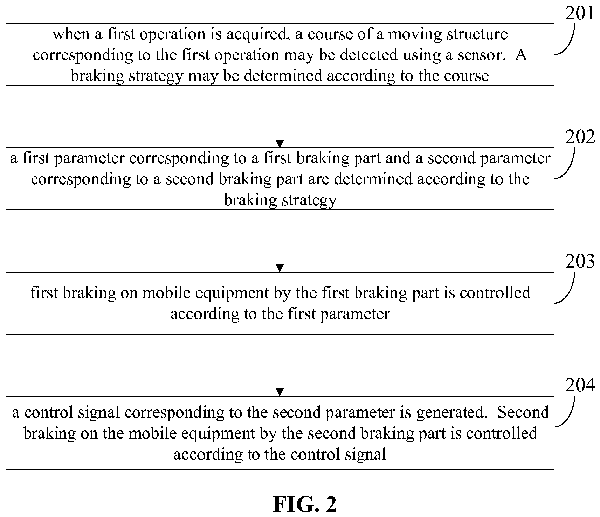

FIG. 2 is a flowchart of a controlling method according to an embodiment herein. The controlling method applies to mobile equipment having a first braking part and a second braking part. The first braking part may be connected to a moving structure. The mobile equipment further includes a sensor for detecting a course of the moving structure. As shown in FIG. 2, the controlling method may include steps as follows.

In step 201, when a first operation is acquired, a course of a moving structure corresponding to the first operation is detected using a sensor. A braking strategy may be determined according to the course.

The mobile equipment may be an electric car. The electric car may be an electric scooter, an electric bicycle, an electric tricycle, an electric four-wheeler, etc.

The mobile equipment has a first braking part and a second braking part. The first braking part brakes through a mechanical structure. The second braking part may brake through a circuit structure. Accordingly, the first braking part is also known as a mechanical brake. The second braking part is also known as an electric brake.

The first operation may be triggered by a user. The user may perform the first operation on a moving structure of the mobile equipment, such that a course of the moving structure is changed. Referring to FIG. 4, the mobile equipment may be an electric bicycle. A braking crank of the electric bicycle may be the moving structure. The user may trigger the first operation by clenching the braking crank of the electric bicycle. The moving structure may be connected to the first braking part through a mechanical structure. A sensor for detecting a clenching course is provided on the mechanical control. The sensor may be connected to the second braking part through a circuit structure.

Having acquired the first operation, the sensor detects the course of the moving structure corresponding to the first operation. The braking strategy may be determined according to the course. The first braking part and the second braking part brake according to the braking strategy. With the braking strategy, a braking strength is enhanced by using both the first braking part and the second braking part.

The sensor may be a potentiometer, a Hall inductive element, etc.

In step 202, a first parameter corresponding to a first braking part and a second parameter corresponding to a second braking part are determined according to the braking strategy.

With the braking strategy, braking strengths of the first braking part and the second braking part are regulated flexibly. The braking strength of the first braking part is determined through the first parameter. The braking strength of the second braking part is determined through the second parameter. The control strategy herein includes information on at least a first parameter and a second parameter. The first parameter corresponding to the first braking part and the second parameter corresponding to the second braking part is determined according to the braking strategy.

As the first braking part brakes through a mechanical structure, the first parameter is a parameter for adjusting the mechanical structure of the first braking part. For example, the first braking part may be a damping part. The damping part may be set near a wheel. When the damping part is pressed against the wheel, the damping part impedes the wheel's movement, thereby braking the mobile equipment. The first parameter may be closeness or tightness between the damping part and the wheel, i.e., how close or tight the damping part is pressed against the wheel. The greater the closeness / tightness, i.e., the closer / tighter the damping part is pressed against the wheel, the stronger a braking force is. The less the closeness / tightness, the weaker the braking force is. When the damping part is not pressed against the wheel, the braking strength is zero.

As the second braking part brakes through a circuit structure, the second parameter is a circuit parameter for adjusting the second braking part. The second braking part per se may be the circuit structure. A driving part of the mobile equipment is a motor. Rotation of the motor drives a wheel of the mobile equipment, thereby driving the mobile equipment. The second braking part brakes the mobile equipment as follows. An electric current is applied to the motor (in a duration determined based on the second parameter), to short circuit a winding of the motor intermittently. When the winding of the motor is short circuited intermittently, rotation of the motor is stopped, such that no power is provided to the wheel, thereby braking the mobile equipment.

In step 203, first braking on mobile equipment by the first braking part is controlled according to the first parameter.

The first parameter is for adjusting the mechanical structure of the first braking part. The mobile equipment is braked by adjusting the mechanical structure of the first braking part according to the first parameter.

Referring to FIG. 4, the mobile equipment may be an electric bicycle. The user may trigger the first braking by the first braking part by clenching a braking crank of the electric bicycle. The braking crank may apply the first braking on the mobile equipment by tightening the first braking part through a brake line. The first braking part may be a damping part. The damping part may be set near a wheel. When the damping part is pressed against the wheel, the damping part impedes the wheel's movement, thereby braking the mobile equipment.

In step 204, a control signal corresponding to the second parameter is generated. Second braking on the mobile equipment by the second braking part is controlled according to the control signal.

A voltage signal output by the sensor may be the control signal. The sensor may be provided with a power supply of 5.0V. When the course of the moving structure is zero, the sensor outputs 1.0V. When the course of the moving structure is maximal, the sensor outputs 4.0V. A voltage value here is exemplary.

The second parameter is a circuit parameter for adjusting the second braking part. The mobile equipment is braked by adjusting a circuit parameter of the second braking part according to the second parameter.

A driving part of the mobile equipment is a motor. Rotation of the motor drives a wheel of the mobile equipment, thereby driving the mobile equipment. The second braking part brakes the mobile equipment as follows. The control signal corresponding to the second parameter is generated. The control signal is sent to the motor, such that an electric current corresponding to the control signal is applied to the motor (in a duration determined based on the second parameter), to short circuit a winding of the motor intermittently. When the winding of the motor is short circuited intermittently, rotation of the motor is stopped, such that no power is provided to the wheel, thereby braking the mobile equipment.

The second braking part may determine, according to the control signal, a locking duration and a driving duration of a driving part within a period of time pre-determined. The second braking part may control the driving part to stop driving within the locking duration. The driving part is a motor. A three-phase circuit or a two-phase circuit of the motor is short circuited within the locking duration to stop driving.

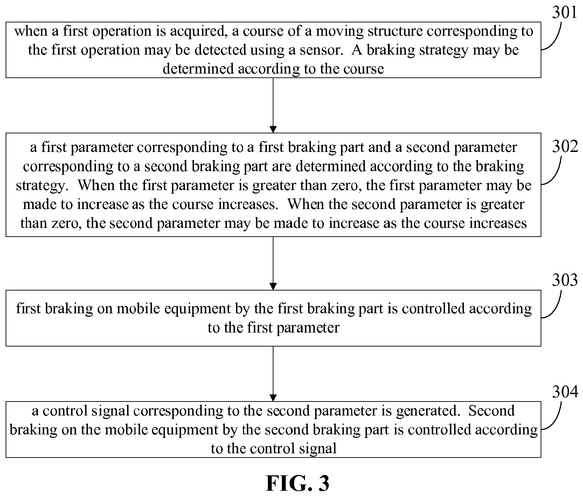

FIG. 3 is a flowchart of a controlling method according to an embodiment herein. The controlling method applies to mobile equipment having a first braking part and a second braking part. The first braking part may be connected to a moving structure. The mobile equipment further includes a sensor for detecting a course of the moving structure. As shown in FIG. 3, the controlling method may include steps as follows.

In step 301, when a first operation is acquired, a course of a moving structure corresponding to the first operation is detected using a sensor. A braking strategy may be determined according to the course.

The mobile equipment may be an electric car. The electric car may be an electric scooter, an electric bicycle, an electric tricycle, an electric four-wheeler, etc.

The mobile equipment has a first braking part and a second braking part. The first braking part brakes through a mechanical structure. The second braking part may brake through a circuit structure. Accordingly, the first braking part is also known as a mechanical brake. The second braking part is also known as an electric brake.

The first operation may be triggered by a user. The user may perform the first operation on a moving structure of the mobile equipment, such that a course of the moving structure is changed. Referring to FIG. 4, the mobile equipment may be an electric bicycle. A braking crank of the electric bicycle may be the moving structure. The user may trigger the first operation by clenching the braking crank of the electric bicycle. The moving structure may be connected to the first braking part through a mechanical structure. A sensor for detecting a clenching course may be provided on the mechanical control. The sensor may be connected to the second braking part through a circuit structure.

Having acquired the first operation, the sensor may detect the course of the moving structure corresponding to the first operation. The braking strategy may be determined according to the course. The first braking part and the second braking part brake according to the braking strategy. With the braking strategy, a braking strength is enhanced by using both the first braking part and the second braking part.

In step 302, a first parameter corresponding to a first braking part and a second parameter corresponding to a second braking part are determined according to the braking strategy. When the first parameter is greater than zero, the first parameter is made to increase as the course increases. When the second parameter is greater than zero, the second parameter is made to increase as the course increases.

With the braking strategy, braking strengths of the first braking part and the second braking part are regulated flexibly. The braking strength of the first braking part is determined through the first parameter. The braking strength of the second braking part is determined through the second parameter. The control strategy herein includes information on at least a first parameter and a second parameter. The first parameter corresponding to the first braking part and the second parameter corresponding to the second braking part is determined according to the braking strategy.

The first parameter indicates a braking strength of the first braking part. The second parameter indicates a braking strength of the second braking part.

As the first braking part brakes through a mechanical structure, the first parameter is a parameter for adjusting the mechanical structure of the first braking part. For example, the first braking part may be a damping part. The damping part may be set near a wheel. When the damping part is pressed against the wheel, the damping part impedes the wheel's movement, thereby braking the mobile equipment. The first parameter may be closeness or tightness between the damping part and the wheel, i.e., how close or tight the damping part is pressed against the wheel. The greater the closeness / tightness, i.e., the closer / tighter the damping part is pressed against the wheel, the stronger a braking force is. The less the closeness / tightness, the weaker the braking force is. When the damping part is not pressed against the wheel, the braking strength is zero.

As the second braking part brakes through a circuit structure, the second parameter is a circuit parameter for adjusting the second braking part. The second braking part per se may be the circuit structure. A driving part of the mobile equipment is a motor. Rotation of the motor drives a wheel of the mobile equipment, thereby driving the mobile equipment. The second braking part brakes the mobile equipment as follows. An electric current is applied to the motor (in a duration determined based on the second parameter), to short circuit a winding of the motor intermittently. When the winding of the motor is short circuited intermittently, rotation of the motor is stopped, such that no power is provided to the wheel, thereby braking the mobile equipment.

According to the braking strategy, when the course is within a first range, both the first parameter and the second parameter are set to zero.

According to the braking strategy, when the course is within a second range, the first parameter is set to be greater than zero and the second parameter is set to zero; or the first parameter is to zero and the second parameter is set to be greater than zero.

According to the braking strategy, when the course is within a third range, both the first parameter and the second parameter are set to be greater than zero,
The course within the first range may be less than the course within the second range. The course within the second range may be less than the course within the third range.

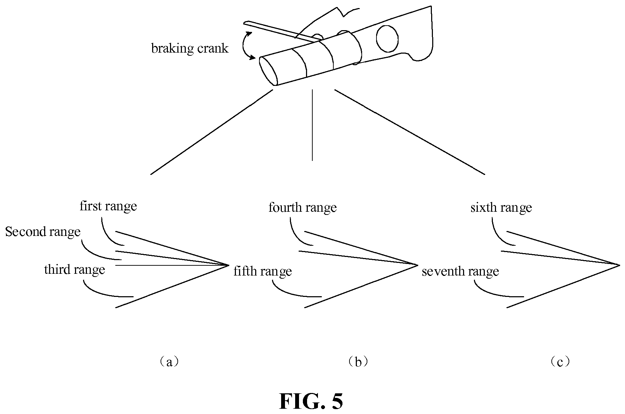

Referring to FIG. 5(a), assume that the moving structure travels an idle course. For example, when the course of the moving structure falls within a first range (within a first quarter of a whole course), braking strengths of both the second braking part and the first braking part are zero. When the course of the moving structure falls within a second range (from a first quarter to a second quarter of the whole course), the braking strength of either the first braking part or the second braking part is greater than zero. When the course of the moving structure falls within a third range (from the second quarter of the whole course to the whole course), the braking strengths of both the second braking part and the first braking part are greater than zero.

According to the braking strategy, when the course is within a fourth range, both the first parameter and the second parameter are set to zero.

According to the braking strategy, when the course is within a fifth range, both the first parameter and the second parameter are set to be greater than zero.

The course within the fourth range may be less than the course within the fifth range.

Referring to FIG. 5(b), assume that the moving structure travels an idle course. For example, when the course of the moving structure falls within a fourth range (within the first quarter of the whole course), braking strengths of both the second braking part and the first braking part are zero. When the course of the moving structure falls within a fifth range (from the first quarter of the whole course to the whole course), the braking strengths of both the second braking part and the first braking part are greater than zero.

According to the braking strategy, when the course is within a sixth range, the first parameter is set to be greater than zero and the second parameter is set to zero; or the first parameter is set to zero and the second parameter is set to be greater than zero.

According to the braking strategy, when the course is within a seventh range, both the first parameter and the second parameter are set to be greater than zero,

The course within the sixth range may be less than the course within the seventh range.

Referring to FIG. 5(c), when the course of the moving structure falls within a sixth range (within the first quarter of the whole course), the braking strength of either the second braking part or the first braking part is zero. When the course of the moving structure falls within a seventh range (from the first quarter of the whole course to the whole course), the braking strengths of both the second braking part and the first braking part are greater than zero.

In step 303, first braking on mobile equipment by the first braking part is controlled according to the first parameter.

The first parameter is for adjusting the mechanical structure of the first braking part. The mobile equipment is braked by adjusting the mechanical structure of the first braking part according to the first parameter.

Referring to FIG. 4, the mobile equipment may be an electric bicycle. The user may trigger the first braking by the first braking part by clenching a braking crank of the electric bicycle. The braking crank may apply the first braking on the mobile equipment by tightening the first braking part through a brake line. The first braking part may be a damping part. The damping part may be set near a wheel. When the damping part is pressed against the wheel, the damping part impedes the wheel's movement, thereby braking the mobile equipment.

In step 304, a control signal corresponding to the second parameter is generated. Second braking on the mobile equipment by the second braking part is controlled according to the control signal.

The second parameter is a circuit parameter for adjusting the second braking part. The mobile equipment is braked by adjusting a circuit parameter of the second braking part according to the second parameter.

A driving part of the mobile equipment is a motor. Rotation of the motor drives a wheel of the mobile equipment, thereby driving the mobile equipment. The second braking part brakes the mobile equipment as follows. The control signal corresponding to the second parameter is generated. The control signal is sent to the motor, such that an electric current corresponding to the control signal is applied to the motor (in a duration determined based on the second parameter), to short circuit a winding of the motor intermittently. When the winding of the motor is short circuited intermittently, rotation of the motor is stopped, such that no power is provided to the wheel, thereby braking the mobile equipment.

A voltage signal output by the sensor may be the control signal. The sensor may be provided with a power supply of 5.0V. When the course of the moving structure is zero, the sensor outputs 1.0V. When the course of the moving structure is maximal, the sensor outputs 4.0V. A voltage value here is exemplary.

When two phases of a motor are short circuited with a duty cycle of less than 10%, no effective braking force is generated. Therefore, 1.0V may correspond to a duty cycle of 10%. 4.0V may correspond to a duty cycle of 100%. When a sensor outputs 3V, two phases of the motor is short circuited with a duty cycle of 70%.

The second braking part may determine, according to the control signal, a locking duration and a driving duration of a driving part within a period of time pre-determined. The second braking part may control the driving part to stop driving within the locking duration. The driving part is a motor. A three-phase circuit or a two-phase circuit of the motor is short circuited within the locking duration to stop driving.

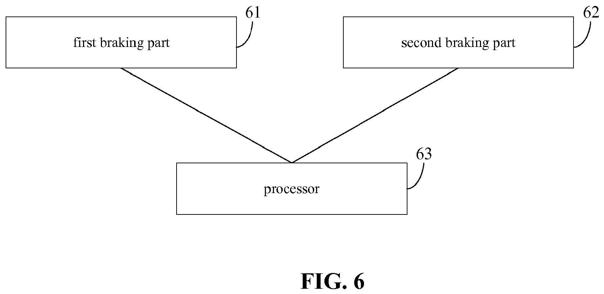

FIG. 6 is a diagram of a structure of mobile equipment according to an embodiment herein. As shown in FIG. 6, the mobile equipment has a first braking part 61 and a second braking part 62. The mobile equipment includes a processor 63.

The processor 63 is arranged for: acquiring a first operation; determining, according to the first operation, a braking strategy; determining, according to the braking strategy, a first parameter corresponding to the first braking part 61 and a second parameter corresponding to the second braking part 62.

The first braking part 61 is arranged for: performing, according to the first parameter, first braking on the mobile equipment.

The second braking part 62 is arranged for: generating a control signal corresponding to the second parameter; performing, according to the control signal, second braking on the mobile equipment.

Those skilled in the art may appreciate that a function implemented by a device in the mobile equipment shown in FIG. 6 may be understood with reference to description relevant to the controlling method.

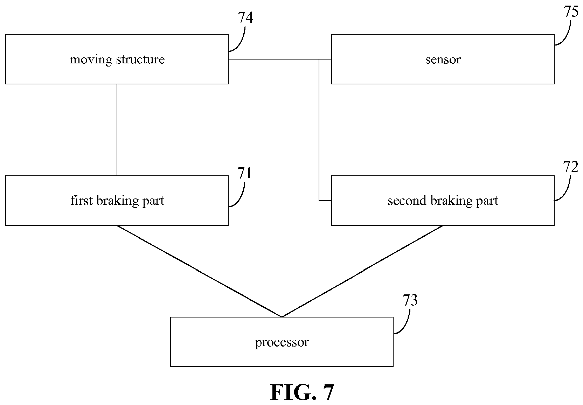

FIG. 7 is a diagram of a structure of mobile equipment according to an embodiment herein. As shown in FIG. 7, the mobile equipment has a first braking part 71 and a second braking part 72. The mobile equipment includes a processor 73.

The processor 73 is arranged for: acquiring a first operation; determining, according to the first operation, a braking strategy; determining, according to the braking strategy, a first parameter corresponding to the first braking part 71 and a second parameter corresponding to the second braking part 72.

The first braking part 71 is arranged for: performing, according to the first parameter, first braking on the mobile equipment.

The second braking part 72 is arranged for: generating a control signal corresponding to the second parameter; performing, according to the control signal, second braking on the mobile equipment.

The first braking part 71 may be connected to a moving structure 74. The mobile equipment may further include a sensor 75 for detecting a course of the moving structure 74.

The sensor 75 may be arranged for: in response to acquiring the first operation, detecting a course of the moving structure 74 corresponding to the first operation.

The processor 73 may further be arranged for: determining, according to the course, the braking strategy.

The first parameter indicates a braking strength of the first braking part 71. The second parameter indicates a braking strength of the second braking part 72.

According to the braking strategy, when the course is within a first range, both the first parameter and the second parameter are set to zero.

According to the braking strategy, when the course is within a second range, the first parameter is set to be greater than zero and the second parameter is set to zero; or the first parameter is set to zero and the second parameter is set to be greater than zero.

According to the braking strategy, when the course is within a third range, both the first parameter and the second parameter are set to be greater than zero,

The course within the first range may be less than the course within the second range. The course within the second range may be less than the course within the third range.

The first parameter indicates a braking strength of the first braking part 71. The second parameter indicates a braking strength of the second braking part 72.

According to the braking strategy, when the course is within a fourth range, both the first parameter and the second parameter are set to zero.

According to the braking strategy, when the course is within a fifth range, both the first parameter and the second parameter are set to be greater than zero.

The course within the fourth range may be less than the course within the fifth range.

The first parameter indicates a braking strength of the first braking part 71. The second parameter indicates a braking strength of the second braking part 72.

According to the braking strategy, when the course is within a sixth range, the first parameter is set to be greater than zero and the second parameter is set to zero; or the first parameter is set to zero and the second parameter is set to be greater than zero.

According to the braking strategy, when the course is within a seventh range, both the first parameter and the second parameter are set to be greater than zero,

The course within the sixth range may be less than the course within the seventh range.

According to the braking strategy, when the first parameter is greater than zero, the first parameter is made to increase as the course increases.

According to the braking strategy, when the second parameter is greater than zero, the second parameter is made to increase as the course increases.

The second braking part 72 may further be arranged for: determining, according to the control signal, a locking duration and a driving duration of a driving part within a period of time pre-determined; controlling the driving part to stop driving within the locking duration.

Those skilled in the art may appreciate that a function implemented by a device in the mobile equipment shown in FIG. 7 may be understood with reference to description relevant to the controlling method.

A conventional electric braking crank, limited by an internal structure thereof, provides, during braking, a controller with but a simple signal. Having received the signal, the controller controls a braking part to output a constant electronic braking force. That is, a conventional electric braking crank serves as a normally open / closed switch. When a handle is clenched such that the handle reaches a maximal displacement thereof, the electric braking crank outputs to the controller a signal indicating but to brake. Having received the signal, the controller controls a braking part to output a constant electronic braking force, in which case a braking force is weakened greatly, which leads to poor user experience during braking.

Accordingly, with embodiments herein, a braking crank is installed on a braking crank case. A braking strength detecting device generates, in response to a movement of a handle of the braking crank during braking, a signal of a braking strength corresponding to the movement. The braking strength detecting device is set inside the braking crank case. The signal of the braking strength is arranged for generating a first force corresponding to a distance by which the handle of the braking crank has moved (i.e., the course). A size of the first force changes as the distance changes. The first force is an electronic braking force.

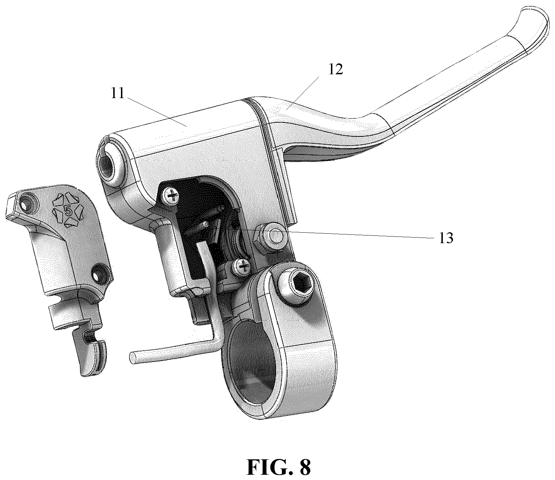

As shown in FIG. 8, a braking crank device according to an embodiment herein includes a braking crank case 11, a braking crank 12, and a braking strength detecting device 13.

The braking crank 12 is installed on the braking crank case 11.

The braking strength detecting device 13 is set inside the braking crank case 11. The braking strength detecting device is arranged for generating, in response to a movement of a handle of the braking crank 12 during braking, a signal of a braking strength corresponding to the movement.

The signal of the braking strength is arranged for generating a first force corresponding to a distance by which the handle of the braking crank has moved (i.e., the course). A size of the first force changes as the distance changes. The first force is an electronic braking force.

With a braking crank device according to an embodiment herein, while a handle of a braking crank 12 is being clenched gradually by a user, i.e., while a distance by which the handle has moved is changing gradually, a braking strength detecting device 13 detects a signal of a braking strength corresponding to the constantly changing distance, to generate an electronic braking force corresponding to the constantly changing distance under control of a controller.

The signal of the braking strength may instruct to stop outputting a driving force that drives mobile equipment.

That is, while the mobile equipment is moving, the signal of the braking strength may instruct the controller to stop providing the mobile equipment with the driving force.

Thus, during braking, while the handle is being clenched gradually, the controller may receive the changing signal of the braking strength output by the braking strength detecting device 13. In this case, the controller generates a control signal according to the signal of the braking strength, such that the mobile equipment is no longer provided with the driving force. Meanwhile, the controller may generate a control signal corresponding to the constantly changing signal of the braking strength, to generate an electronic braking force corresponding to the constantly changing distance, such that the mobile equipment is braked.

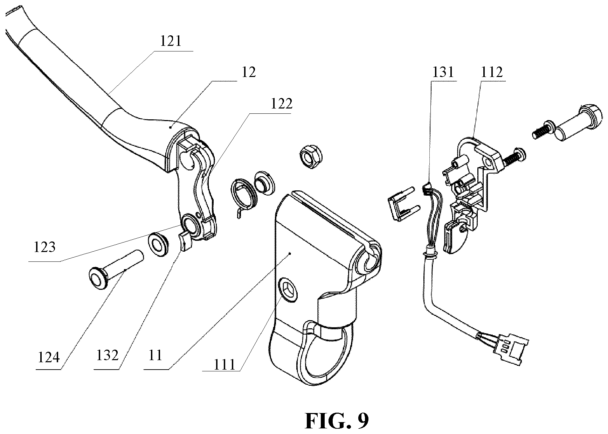

As shown in FIG. 9, the braking strength detecting device 13 may be a Hall element 131. The braking crank device may further include a magnet 132.

The magnet 132 may be arranged for moving with displacement of the handle of the braking crank 12 during braking.

The Hall element 131 may be arranged for detecting strength of a magnetic field generated by the magnet 132 during movement, and generating, according to the strength of the magnetic field detected, the signal of the braking strength corresponding to the movement.

The Hall element 131 may be a linear Hall element.

The magnet 132 may be of magnetic steel (permanent magnet).

As shown in FIG. 9, the magnet 132 may be set on an extending part 122 integral to the handle 121 of the braking crank 12. The extending part 122 may be set with a first hole for connection 123. The braking crank case 11 may be set with a second hole for connection 111 corresponding to the first hole for connection 123.

A braking crank shaft 124 may be arranged for installing the braking crank 11 on the braking crank case 11 by passing through the first hole for connection 123 and the second hole for connection 111.

After an external force has been applied to the handle 121, the braking crank 12 may move within a range of locations along the braking crank shaft 124.

Meanwhile, as shown in FIG. 9, the braking crank case 11 may be set with a Hall base 112. The Hall element 131 may be secured on the Hall base 112. The Hall element 131 may be arranged for not moving with the displacement of the handle 121 of the braking crank 12.

During braking, while a handle 121 of a braking crank is being clenched gradually by a user, the magnet 132 may move with movement of the handle 121 of the braking crank 12. The Hall element 131 may be secured and may not move. Therefore, while the magnet 132 is moving, a location of the Hall element 131 with respect to the magnet 132 may change, such that the Hall element 131 detects the strength of the magnetic field generated by the magnet at different locations (which may be construed by the Hall element 131 as change in magnetic induction). The strength of the magnetic field at different locations may reflect indirectly the signal of the braking strength corresponding to the locations. The Hall element 131 may convert the detected strength of the magnetic field into a linear analog electric (voltage or current) signal, to generate a linear electronic braking force corresponding to the constantly changing distance under control of a controller.

The Hall element 131 and the magnet 132 may have to be set such that the magnet 132 generates a magnetic field oriented parallel to the Hall element 131 (i.e., a sensing surface of the Hall element is perpendicular to the orientation of the magnetic field), to allow the Hall element 131 to detect accurately the strength of the magnetic field of the magnet 132 at different locations while the magnet 132 is moving.

Thus, during braking, while a handle is being clenched gradually, a controller receives not only a displacement signal output by a displacement detecting device, but also a linear analog electric signal output by a Hall element 131. In this case, the controller generates a control signal according to the linear analog electric signal so as to stop providing mobile equipment with a driving force. Meanwhile, the controller may generate a control signal corresponding to the linear analog electric signal, to generate an electronic braking force with linearly increasing strength, such that the mobile equipment is braked.

As shown in FIG. 9, another auxiliary part, such as a heat shrinkable tube, a screw, a nut, a recovering part (to recover a braking crank 12 after it has moved), a signal line, etc., may be required to set and connect the Hall element 131, the Hall base 112, the braking crank shaft 124, etc.

With a braking crank device according to an embodiment herein, a braking crank 12 is installed on a braking crank case 11. During braking, a braking strength detecting device 13 set inside the braking crank case 11 generates a signal of a braking strength corresponding to movement of a handle of the braking crank 12 while the handle is moving. The signal of the braking strength is arranged for generating a first force corresponding to a distance by which the handle of the braking crank 12 has moved. A size of the first force changes as the distance changes. The first force is an electronic braking force. During braking, the signal of the braking strength corresponding to the change in the distance by which the handle has moved is generated, thereby generating an electronic braking force corresponding to strength of a braking signal, such that a continuous increasing electronic braking force is generated during braking, thereby providing a continuous increasing braking force, increasing the braking force, enhancing a braking result. By providing braking with an electronic braking force of a size changing with change in a distance by which a handle of a braking crank has moved, somatosensory control of a size of an electronic braking force by a user is enabled, enhancing a braking precision, improving braking experience, thereby enhancing amenity in braking.

Moreover, a signal corresponding to a braking strength may be detected by coordination between a linear Hall element 131 and a magnet 132, such that the signal of the braking strength corresponding to a distance by which a handle has moved is detected accurately.

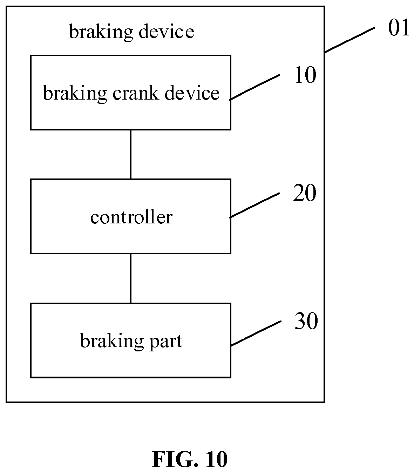

As shown in FIG. 10, a braking device 01 based on an aforementioned embodiment includes a braking crank device 10, a controller 20, and a braking part 30.

As shown in FIG. 8, the braking crank device 10 includes a braking crank case 11, a braking crank, and a braking strength detecting device.

The braking crank 12 is installed on the braking crank case 11.

The braking strength detecting device 13 is set inside the braking crank case 11. The braking strength detecting device is arranged for: generating, in response to a movement of a handle of the braking crank during braking, a signal of a braking strength corresponding to the movement, and outputting the signal of the braking strength to the controller 20.

The controller 20 is arranged for: generating, according to the signal of the braking strength, a first control signal; controlling, according to the first control signal, electric braking on a driving part by the braking part 30. A size of a braking force thereof changes as a distance by which the handle of the braking crank has moved changes.

The braking part 30 may brake through a circuit structure. The braking part per se may be the circuit structure. A driving part is a motor. Rotation of the motor drives a wheel of the mobile equipment, thereby driving the mobile equipment. The braking part 30 brakes the mobile equipment as follows. An electric current is applied to the motor (in a duration determined by the controller 20 according to the signal of the braking strength corresponding to the movement), to short circuit a winding of the motor intermittently. When the winding of the motor is short circuited intermittently, rotation of the motor is stopped, such that no power is provided to the wheel, thereby braking the mobile equipment.

With a braking crank device 10 according to an embodiment herein, while a handle of a braking crank 12 is being clenched gradually by a user, i.e., while a distance by which the handle has moved is changing gradually, a braking strength detecting device 13 detects a signal of a braking strength corresponding to a constantly changing distance, and output the generated signal to the controller 20. The controller 20 may constantly output a control signal to the braking part 30 according to the signal of the braking strength, to control the braking part 30 to apply, to the driving part, an electric braking force of a size corresponding to the constantly changing distance.

The controller 20 may further be arranged for generating, according to the signal of the braking strength, a second control signal to stop outputting a driving force that drives mobile equipment (i.e., controlling the driving part to stop generating a driving force).

That is, while the mobile equipment is moving, the signal of the braking strength may instruct the controller 20 to stop providing the mobile equipment with the driving force.

Thus, during braking, while a handle is being clenched gradually, a controller 20 may receive a changing signal of a braking strength output by a braking strength detecting device 13. In this case, the controller 20 may generate a control signal according to the signal of the braking strength to control a driving part to stop providing mobile equipment with a driving force. Meanwhile, the controller 20 may constantly output a control signal to the braking part 30 according to the signal of the braking strength, to control the braking part 30 to apply, to the driving part, an electric braking force of a size corresponding to the constantly changing distance, such that the mobile equipment is braked.

As shown in FIG. 9, the braking strength detecting device 13 may be a Hall element 131. The braking crank device 10 may further include a magnet 132.

The magnet 132 may be arranged for moving with displacement of the handle of the braking crank 12 during braking.

The Hall element 131 may be arranged for detecting strength of a magnetic field generated by the magnet 132 during movement, and generating, according to the strength of the magnetic field detected, the signal of the braking strength corresponding to the movement.

The Hall element 131 may be a linear Hall element.

The magnet 132 may be of magnetic steel (permanent magnet).

As shown in FIG. 9, the magnet 132 may be set on an extending part 122 integral to the handle 121 of the braking crank 12. The extending part 122 may be set with a first hole for connection 123. The braking crank case 11 may be set with a second hole for connection 111 corresponding to the first hole for connection 123.

A braking crank shaft 124 may be arranged for installing the braking crank 11 on the braking crank case 11 by passing through the first hole for connection 123 and the second hole for connection 111.

After an external force has been applied to the handle 121, the braking crank 12 may move within a range of locations along the braking crank shaft 124.

Meanwhile, as shown in FIG. 9, the braking crank case 11 may be set with a Hall base 112. The Hall element 131 may be secured on the Hall base 112. The Hall element 131 may be arranged for not moving with the displacement of the handle 121 of the braking crank 12.

During braking, while a handle of a braking crank is being clenched gradually by a user, the magnet 132 may move with movement of the handle 121 of the braking crank 12. The Hall element 131 may be secured and may not move. Therefore, while the magnet 132 is moving, a location of the Hall element 131 with respect to the magnet 132 may change, such that the Hall element 131 detects the strength of the magnetic field generated by the magnet at different locations (which may be construed by the Hall element 131 as change in magnetic induction). The strength of the magnetic field at different locations may reflect indirectly the signal of the braking strength corresponding to the locations. The Hall element 131 may convert the detected strength of the magnetic field into a linear analog electric (voltage or current) signal, to generate a linear electronic braking force corresponding to the constantly changing distance under control of a controller.

The Hall element 131 and the magnet 132 may have to be set such that the magnet 132 generates a magnetic field oriented parallel to the Hall element 131 (i.e., a sensing surface of the Hall element is perpendicular to the orientation of the magnetic field), to allow the Hall element 131 to detect the strength of the magnetic field of the magnet 132 at different locations while the magnet 132 is moving.

Thus, during braking, while a handle is being clenched gradually, a controller receives not only a displacement signal output by a displacement detecting device, but also a linear analog electric signal output by a Hall element 131. In this case, the controller 20 generates a control signal according to the linear analog electric signal so as to stop providing mobile equipment with a driving force. Meanwhile, the controller 20 may generate a control signal corresponding to the linear analog electric signal, to generate an electronic braking force with linearly increasing strength, such that the mobile equipment is braked.

As shown in FIG. 9, another auxiliary part, such as a heat shrinkable tube, a screw, a nut, a recovering part (to recover a braking crank 12 after it has moved), a signal line, etc., may be required to set and connect the Hall element 131, the Hall base 112, the braking crank shaft 124, etc.

Mobile equipment according to an embodiment herein includes the braking device. The braking device includes a braking crank device 10, a controller, and a braking part (not shown in FIG. 4).

The mobile equipment may be an electric bicycle (as shown in FIG. 4), an electric scooter, an electric tricycle, an electric four-wheeler, etc.

With a solution according to an embodiment herein, a braking crank 12 is installed on a braking crank case 11. During braking, a braking strength detecting device 13 set inside the braking crank case 11 generates a signal of a braking strength corresponding to movement of a handle of the braking crank 12 while the handle is moving. The signal of the braking strength is arranged for generating a first force corresponding to a distance by which the handle of the braking crank 12 has moved. A size of the first force changes as the distance changes. The first force is an electronic braking force. During braking, the signal of the braking strength corresponding to the change in the distance by which the handle has moved is generated, thereby generating an electronic braking force corresponding to strength of a braking signal, such that a continuous increasing electronic braking force is generated during braking, thereby providing a continuous increasing braking force, increasing the braking force, enhancing a braking result. By providing braking with an electronic braking force of a size changing with change in a distance by which a handle of a braking crank has moved, somatosensory control of a size of an electronic braking force by a user is enabled, enhancing a braking precision, improving braking experience, thereby enhancing amenity in braking.

Moreover, a signal corresponding to a braking strength may be detected by coordination between a linear Hall element 131 and a magnet 132, such that the signal of the braking strength corresponding to a distance by which a handle has moved is detected accurately.

Solutions according to embodiments herein may be combined with each other as needed as long as no conflict results from the combination.

What described are but embodiments herein and are not intended to limit the scope of the subject disclosure.

## Claims

1. A braking device (1), comprising a braking crank device (10), a controller (20), and a braking part (30),
wherein the braking crank device (10) comprises a braking crank case (11), a braking crank (12) installed on the braking crank case (11), and a braking strength detecting device (13) set inside the braking crank case (11),
wherein the braking strength detecting device (13) is arranged for generating, in response to a movement of a handle (121) of the braking crank (12) during braking, a signal of a braking strength corresponding to the movement, that is, a distance by which the handle (121) of the braking crank (12) has moved, and outputting the signal of the braking strength to the controller (20),
wherein the controller (20) is arranged for: generating, according to the signal of the braking strength, a first control signal, and controlling, according to the first control signal, electric braking on a driving part by the braking part (30),
wherein the driving part is a motor of mobile equipment,
**characterized in that** the braking part (30) is arranged for braking the mobile equipment by short circuiting a winding of the motor intermittently in a duration determined by the controller (20) according to the signal of the braking strength corresponding to the movement.

2. The braking device (1) of claim 1, wherein the braking strength detecting device (13) is a Hall element (131), wherein the braking crank device (10) further comprises a magnet (132),
wherein the magnet (132) is arranged for moving with displacement of the handle (121) of the braking crank (12) during braking,
wherein the Hall element (131) is arranged for: detecting strength of a magnetic field generated by the magnet (132) during movement, and generating, according to the strength of the magnetic field detected, the signal of the braking strength corresponding to the movement.

3. The braking device (1) of claim 2, wherein the magnet (132) is set on an extending part (122) integral to the handle (121),
wherein the extending part (122) is set with a first hole for connection (123), wherein the braking crank case (11) is set with a second hole for connection (111) corresponding to the first hole for connection (123),
wherein a braking crank shaft (124) is arranged for installing the braking crank (12) on the braking crank case (11) by passing through the first hole for connection (123) and the second hole for connection (111).

4. The braking device (1) of claim 2, wherein the braking crank case (11) is set with a Hall base (112), wherein the Hall element (131) is secured on the Hall base (112), wherein the Hall element (131) is arranged for not moving with the displacement of the handle (121) of the braking crank (12).

5. The braking device (1) of any one of claims 1 to 4, wherein the signal of the braking strength is arranged for instructing to stop outputting a driving force that drives the mobile equipment.

6. The mobile equipment, comprising the braking device (1) of any one of claims 1 to 5.

7. A controlling method, applying to mobile equipment having a first braking part (61, 71) and a second braking part (62, 72), the controlling method comprising:
acquiring (101) a first operation; determining, according to the first operation, a braking strategy;
determining (102, 202, 302), according to the braking strategy, a first parameter corresponding to the first braking part (61, 71) and a second parameter corresponding to the second braking part (62, 72);
controlling (103, 203, 303), according to the first parameter, first braking on the mobile equipment by the first braking part (61, 71);
generating (104, 204, 304) a control signal corresponding to the second parameter; and controlling, according to the control signal, second braking on the mobile equipment by the second braking part (62, 72),
wherein the first braking part (61, 71) is a mechanical brake,
wherein the first parameter is for adjusting a mechanical structure of the first braking part (61, 71),
wherein the first parameter indicates a braking strength of the first braking part (61, 71),
wherein the second braking part (62, 72) is an electric brake,
wherein the second parameter is a circuit parameter for adjusting the second braking part (62, 72),
wherein the second parameter indicates a braking strength of the second braking part (62, 72),
wherein a driving part of the mobile equipment is a motor,
**characterized in that** the second braking part (62, 72) is arranged for braking the mobile equipment by short circuiting a winding of the motor intermittently in a duration determined based on the second parameter.

8. The controlling method of claim 7, wherein the first braking part (61, 71) is connected to a moving structure (74), wherein the mobile equipment further comprises a sensor (75) for detecting a course of the moving structure (74),
wherein the acquiring a first operation; determining, according to the first operation, a braking strategy comprises:
in response to acquiring the first operation, detecting (201, 301), using the sensor (75), a course of the moving structure (74) corresponding to the first operation; and
determining (201, 301), according to the course, the braking strategy.

9. The controlling method of claim 8, wherein the braking strategy comprises:
in response to the course being within a first range, setting both the first parameter and the second parameter to zero;
in response to the course being within a second range, setting the first parameter to be greater than zero and the second parameter to zero; or setting the first parameter to zero and the second parameter to be greater than zero; and / or
in response to the course being within a third range, setting both the first parameter and the second parameter to be greater than zero,
wherein the course within the first range is less than the course within the second range, wherein the course within the second range is less than the course within the third range.

10. The controlling method of claim 8, wherein the braking strategy comprises:
in response to the course being within a fourth range, setting both the first parameter and the second parameter to zero; and / or
in response to the course being within a fifth range, setting both the first parameter and the second parameter to be greater than zero,
wherein the course within the fourth range is less than the course within the fifth range.

11. The controlling method of claim 8, wherein the braking strategy comprises:
in response to the course being within a sixth range, setting the first parameter to be greater than zero and the second parameter to zero; or setting the first parameter to zero and the second parameter to be greater than zero; and / or
in response to the course being within a seventh range, setting both the first parameter and the second parameter to be greater than zero,
wherein the course within the sixth range is less than the course within the seventh range.

12. The controlling method of any one of claims 8 to 11, wherein the braking strategy further comprises:
in response to the first parameter being greater than zero, increasing the first parameter as the course increases; and / or
in response to the second parameter being greater than zero, increasing the second parameter as the course increases.

13. The controlling method of any one of claims 7 to 11, wherein the controlling, according to the control signal, second braking on the mobile equipment by the second braking part (62, 72) comprises:
controlling the second braking part (62, 72) to determine, according to the control signal, a locking duration and a driving duration of the driving part within a period of time pre-determined;
controlling the driving part to stop driving within the locking duration.

## Patentansprüche

1. Bremsvorrichtung (1), die eine Bremshebelvorrichtung (10), eine Steuerung (20) und ein Bremsteil (30) umfasst,
wobei die Bremshebelvorrichtung (10) ein Bremshebelgehäuse (11), einen Bremshebel (12), der am Bremshebelgehäuse (11) montiert ist, und eine Bremskraftdetektionsvorrichtung (13), die im Bremshebelgehäuse (11) angebracht ist, umfasst,
wobei die Bremskraftdetektionsvorrichtung (13) angeordnet ist, in Reaktion auf eine Bewegung eines Griffs (121) des Bremshebels (12) während des Bremsens ein Signal einer Bremskraft, die der Bewegung entspricht, das heißt einem Abstand, um den sich der Griff (121) des Bremshebels (12) bewegt hat, zu erzeugen und das Signal der Bremskraft an die Steuerung (20) auszugeben,
wobei die Steuerung (20) zu Folgendem angeordnet ist: Erzeugen eines ersten Steuersignals gemäß dem Signal der Bremskraft und Steuern einer elektrischen Bremsung an einem Antriebsteil durch das Bremsteil (30) gemäß dem ersten Steuersignal,
wobei das Antriebsteil ein Motor einer mobilen Ausrüstung ist,
**dadurch gekennzeichnet, dass** das Bremsteil (30) zum Bremsen der mobilen Ausrüstung durch intermittierendes Kurzschließen einer Wicklung des Motors über eine Dauer, die von der Steuerung (20) bestimmt wird, gemäß dem Signal der Bremskraft, die der Bewegung entspricht, angeordnet ist.

2. Bremsvorrichtung (1) nach Anspruch 1, wobei die Bremskraftdetektionsvorrichtung (13) ein Hallelement (131) ist, wobei die Bremshebelvorrichtung (10) ferner einen Magneten (132) umfasst,
wobei der Magnet (132) bei Versatz des Griffs (121) des Bremshebels (12) während des Bremsens zum Bewegen angeordnet ist,
wobei das Hallelement (131) zu Folgendem angeordnet ist: Detektieren einer Stärke eines Magnetfelds, das während der Bewegung vom Magneten (132) erzeugt wird, und Erzeugen des Signals der Bremskraft, die der Bewegung entspricht, gemäß der detektierten Stärke des Magnetfelds.

3. Bremsvorrichtung (1) nach Anspruch 2, wobei der Magnet (132) an einem Verlängerungsteil (122), das in den Griff (121) integriert ist, angebracht ist,
wobei das Verlängerungsteil (122) mit einem ersten Verbindungsloch (123) versehen ist, wobei das Bremshebelgehäuse (11) mit einem zweiten Verbindungsloch (111), das dem ersten Verbindungsloch (123) entspricht, versehen ist,
wobei eine Bremshebelwelle (124) zum Montieren des Bremshebels (12) am Bremshebelgehäuse (11) durch Führen durch das erste Verbindungsloch (123) und das zweite Verbindungsloch (111) angeordnet ist.

4. Bremsvorrichtung (1) nach Anspruch 2, wobei das Bremshebelgehäuse (11) mit einer Hallbasis (112) versehen ist, wobei das Hallelement (131) an der Hallbasis (112) befestigt ist, wobei das Hallelement (131) angeordnet ist, sich mit dem Versatz des Griffs (121) des Bremshebels (12) nicht zu bewegen.

5. Bremsvorrichtung (1) nach einem der Ansprüche 1 bis 4, wobei das Signal der Bremskraft angeordnet ist, das Beenden des Ausgebens einer Antriebskraft, die die mobile Ausrüstung antreibt, anzuweisen.

6. Mobile Ausrüstung, die die Bremsvorrichtung (1) nach einem der Ansprüche 1 bis 5 umfasst.

7. Steuerverfahren, das auf eine mobile Ausrüstung mit einem ersten Bremsteil (61, 71) und einem zweiten Bremsteil (62, 72) angewendet wird, wobei das Steuerverfahren Folgendes umfasst:
Erfassen (101) einer ersten Betätigung; Bestimmen einer Bremsstrategie gemäß der ersten Betätigung;
Bestimmen (102, 202, 302) eines ersten Parameters, der dem ersten Bremsteil (61, 71) entspricht, und eines zweiten Parameters, der dem zweiten Bremsteil (62, 72) entspricht, gemäß der Bremsstrategie;
Steuern (103, 203, 303) einer ersten Bremsung an der mobilen Ausrüstung durch das erste Bremsteil (61, 71) gemäß dem ersten Parameter;
Erzeugen (104, 204, 304) eines Steuersignals, das dem zweiten Parameter entspricht; und Steuern einer zweiten Bremsung an der mobilen Ausrüstung durch das zweite Bremsteil (62, 72) gemäß dem Steuersignal,
wobei das erste Bremsteil (61, 71) eine mechanische Bremse ist,
wobei der erste Parameter dem Anpassen einer mechanischen Struktur des ersten Bremsteils (61, 71) dient,
wobei der erste Parameter eine Bremskraft des ersten Bremsteils (61, 71) anzeigt,
wobei das zweite Bremsteil (62, 72) eine elektrische Bremse ist,
wobei der zweite Parameter ein Schaltungsparameter zum Anpassen des zweiten Bremsteils (62, 72) ist,
wobei der zweite Parameter eine Bremskraft des zweiten Bremsteils (62, 72) anzeigt,
wobei ein Antriebsteil der mobilen Ausrüstung ein Motor ist,
**dadurch gekennzeichnet, dass** das zweite Bremsteil (62, 72) zum Bremsen der mobilen Ausrüstung durch intermittierendes Kurzschließen einer Wicklung des Motors über eine Dauer, die auf Basis des zweiten Parameters bestimmt wird, angeordnet ist.

8. Steuerverfahren nach Anspruch 7, wobei das erste Bremsteil (61, 71) mit einer sich bewegenden Struktur (74) verbunden ist, wobei die mobile Ausrüstung ferner einen Sensor (75) zum Detektieren eines Kurses der sich bewegenden Struktur (74) umfasst,
wobei das Erfassen einer ersten Betätigung; Bestimmen einer Bremsstrategie gemäß der ersten Betätigung Folgendes umfasst:
in Reaktion auf das Erfassen der ersten Betätigung Detektieren (201, 301) eines Kurses der sich bewegenden Struktur (74), der der ersten Betätigung entspricht, unter Verwendung des Sensors (75); und
Bestimmen (201, 301) der Bremsstrategie gemäß dem Kurs.

9. Steuerverfahren nach Anspruch 8, wobei die Bremsstrategie Folgendes umfasst:
in Reaktion darauf, dass der Kurs in einem ersten Bereich liegt, Einstellen sowohl des ersten Parameters als auch des zweiten Parameters auf null;
in Reaktion darauf, dass der Kurs in einem zweiten Bereich liegt, Einstellen des ersten Parameters auf größer als null und des zweiten Parameters auf null oder Einstellen des ersten Parameters auf null und des zweiten Parameters auf größer als null; und/oder
in Reaktion darauf, dass der Kurs in einem dritten Bereich liegt, Einstellen sowohl des ersten Parameters als auch des zweiten Parameters auf größer als null,
wobei der Kurs im ersten Bereich kleiner ist als der Kurs im zweiten Bereich, wobei der Kurs im zweiten Bereich kleiner ist als der Kurs im dritten Bereich.

10. Steuerverfahren nach Anspruch 8, wobei die Bremsstrategie Folgendes umfasst:
in Reaktion darauf, dass der Kurs in einem vierten Bereich liegt, Einstellen sowohl des ersten Parameters als auch des zweiten Parameters auf null; und/oder
in Reaktion darauf, dass der Kurs in einem fünften Bereich liegt, Einstellen sowohl des ersten Parameters als auch des zweiten Parameters auf größer als null,
wobei der Kurs im vierten Bereich kleiner ist als der Kurs im fünften Bereich.

11. Steuerverfahren nach Anspruch 8, wobei die Bremsstrategie Folgendes umfasst:
in Reaktion darauf, dass der Kurs in einem sechsten Bereich liegt, Einstellen des ersten Parameters auf größer als null und des zweiten Parameters auf null oder Einstellen des ersten Parameters auf null und des zweiten Parameters auf größer als null; und/oder
in Reaktion darauf, dass der Kurs in einem siebten Bereich liegt, Einstellen sowohl des ersten Parameters als auch des zweiten Parameters auf größer als null,
wobei der Kurs im sechsten Bereich kleiner ist als der Kurs im siebten Bereich.

12. Steuerverfahren nach einem der Ansprüche 8 bis 11, wobei die Bremsstrategie ferner Folgendes umfasst:
in Reaktion darauf, dass der erste Parameter größer als null ist, Erhöhen des ersten Parameters, wenn sich der Kurs erhöht; und/oder
in Reaktion darauf, dass der zweite Parameter größer als null ist, Erhöhen des zweiten Parameters, wenn sich der Kurs erhöht.

13. Steuerverfahren nach einem der Ansprüche 7 bis 11, wobei das Steuern einer zweiten Bremsung an der mobilen Ausrüstung durch das zweite Bremsteil (62, 72) gemäß dem Steuersignal Folgendes umfasst:
Steuern des zweiten Bremsteils (62, 72), um gemäß dem Steuersignal eine Verriegelungsdauer und eine Antriebsdauer des Antriebsteils innerhalb einer vorbestimmten Zeitperiode zu bestimmen;
Steuern des Antriebsteils derart, dass innerhalb der Verriegelungsdauer das Antreiben gestoppt ist.

## Revendications

1. Dispositif de freinage (1) comprenant un dispositif de levier de freinage (10), un organe de commande (20) et une partie de freinage (30),
dans lequel le dispositif de levier de freinage (10) comprend un carter de freinage (11), un levier de freinage (12) installé sur le carter de freinage (11) et un dispositif de détection de force de freinage (13) placé à l'intérieur du carter de freinage (11),
dans lequel le dispositif de détection de force de freinage (13) est agencé pour générer, en réponse à un mouvement d'une poignée (121) du levier de freinage (12) pendant le freinage, un signal d'une force de freinage correspondant au mouvement, c'est-à-dire une distance sur laquelle la poignée (121) du levier de freinage (12) s'est déplacée, et transmettre le signal de la force de freinage à l'organe de commande (20),
dans lequel l'organe de commande (20) est agencé pour : générer, selon le signal de la force de freinage, un premier signal de commande, et commander, selon le premier signal de commande, le freinage électrique sur une partie d'entraînement par la partie de freinage (30),
dans lequel la partie d'entraînement est un moteur d'équipement mobile,
**caractérisé en ce que** la partie de freinage (30) est agencée pour freiner l'équipement mobile en court-circuitant un enroulement du moteur de manière intermittente pendant une durée déterminée par l'organe de commande (20) selon le signal de la force de freinage correspondant au mouvement.

2. Dispositif de freinage (1) selon la revendication 1, dans lequel le dispositif de détection de force de freinage (13) est un élément à effet Hall (131), dans lequel le dispositif de levier de freinage (10) comprend en outre un aimant (132),
dans lequel l'aimant (132) est agencé pour se déplacer avec le déplacement de la poignée (121) du levier de freinage (12) pendant le freinage,
dans lequel l'élément à effet Hall (131) est agencé pour : détecter la force d'un champ magnétique généré par l'aimant (132) pendant le mouvement, et générer, selon la force du champ magnétique détecté, le signal de la force de freinage correspondant au mouvement.

3. Dispositif de freinage (1) selon la revendication 2, dans lequel l'aimant (132) est placé sur une partie d'extension (122) solidaire de la poignée (121),
dans lequel la partie d'extension (122) est établie avec un premier trou pour le raccordement (123), dans lequel le carter de freinage (11) est établi avec un second trou pour le raccordement (111) correspondant au premier trou pour le raccordement (123),
dans lequel un vilebrequin de freinage (124) est agencé pour installer le levier de freinage (12) sur le carter de freinage (11) en passant par le premier trou pour le raccordement (123) et le second trou pour le raccordement (111).

4. Dispositif de freinage (1) selon la revendication 2, dans lequel le carter de freinage (11) est établi avec une base à effet Hall (112), dans lequel l'élément à effet Hall (131) est fixé sur la base à effet Hall (112), dans lequel l'élément à effet Hall (131) est agencé pour ne pas se déplacer avec le déplacement de la poignée (121) du levier de freinage (12).

5. Dispositif de freinage (1) selon l'une quelconque des revendications 1 à 4, dans lequel le signal de la force de freinage est agencé pour indiquer d'arrêter la production d'une force d'entraînement qui entraîne l'équipement mobile.

6. Équipement mobile comprenant le dispositif de freinage (1) selon l'une quelconque des revendications 1 à 5.

7. Procédé de commande s'appliquant à l'équipement mobile ayant une première partie de freinage (61, 71) et une seconde partie de freinage (62, 72), le procédé de commande comprenant les étapes suivantes :
acquérir (101) une première opération ; déterminer, selon la première opération, une stratégie de freinage ;
déterminer (102, 202, 302), selon la stratégie de freinage, un premier paramètre correspondant à la première partie de freinage (61, 71) et un second paramètre correspondant à la seconde partie de freinage (62, 72) ;
commander (103, 203, 303) selon le premier paramètre, le premier freinage sur l'équipement mobile par la première partie de freinage (61, 71) ;
générer (104, 204, 304) un signal de commande correspondant au second paramètre ; et commander, selon le signal de commande, le second freinage sur l'équipement mobile par la seconde partie de freinage (62, 72),
dans lequel la première partie de freinage (61, 71) est un frein mécanique,
dans lequel le premier paramètre est prévu pour ajuster une structure mécanique de la première partie de freinage (61, 71),
dans lequel le premier paramètre indique une force de freinage de la première partie de freinage (61, 71),
dans lequel la seconde partie de freinage (62, 72) est un frein électrique,
dans lequel le second paramètre est un paramètre de circuit pour ajuster la seconde partie de freinage (62, 72),
dans lequel le second paramètre indique une force de freinage de la seconde partie de freinage (62, 72),
dans lequel une partie d'entraînement de l'équipement mobile est un moteur,
**caractérisé en ce que** la seconde partie de freinage (62, 72) est agencée pour freiner l'équipement mobile en court-circuitant un enroulement du moteur de manière intermittente pendant une durée déterminée sur la base du second paramètre.

8. Procédé de commande selon la revendication 7, dans lequel la première partie de freinage (61, 71) est raccordée à une structure de déplacement (74), dans lequel l'équipement mobile comprend en outre un capteur (75) pour détecter une course de la structure de déplacement (74),
dans lequel l'étape pour acquérir une première opération ; déterminer selon la première opération, une stratégie de freinage, comprend :
en réponse à l'acquisition de la première opération, détecter (201, 301), en utilisant le capteur (75), une course de la structure de déplacement (74) correspondant à la première opération ; et
déterminer (201, 301), selon la course, la stratégie de freinage.

9. Procédé de commande selon la revendication 8, dans lequel la stratégie de freinage comprend les étapes suivantes :
en réponse à la course qui est dans une première plage, régler à la fois le premier paramètre et le second paramètre à zéro ;
en réponse à la course qui est dans une deuxième plage, régler le premier paramètre pour qu'il soit supérieur à zéro et le second paramètre à zéro ; ou régler le premier paramètre à zéro et le second paramètre pour qu'il soit supérieur à zéro ; et/ou
en réponse à la course qui est dans une troisième plage, régler à la fois le premier paramètre et le second paramètre pour qu'ils soient supérieurs à zéro,
dans lequel la course dans la première plage est inférieure à la course dans la deuxième plage, dans lequel la course dans la deuxième plage est inférieure à la course dans la troisième plage.

10. Procédé de commande selon la revendication 8, dans lequel la stratégie de freinage comprend les étapes suivantes :
en réponse à la course qui est dans une quatrième plage, régler à la fois le premier paramètre et le second paramètre à zéro ; et/ou
en réponse à la course qui est dans une cinquième plage, régler à la fois le premier paramètre et le second paramètre pour qu'ils soient supérieurs à zéro,
dans lequel la course dans la quatrième plage est inférieure à la course dans la cinquième plage.

11. Procédé de commande selon la revendication 8, dans lequel la stratégie de freinage comprend les étapes suivantes :
en réponse à la course qui est dans une sixième plage, régler le premier paramètre pour qu'il soit supérieur à zéro et le second paramètre à zéro ; ou régler le premier paramètre à zéro et le second paramètre pour qu'il soit supérieur à zéro ; et/ou
en réponse à la course qui est dans une septième plage, régler à la fois le premier paramètre et le second paramètre pour qu'ils soient supérieurs à zéro,
dans lequel la course dans la sixième plage est inférieure à la course dans la septième plage.

12. Procédé de commande selon l'une quelconque des revendications 8 à 11, dans lequel la stratégie de freinage comprend en outre les étapes suivantes :
en réponse au premier paramètre qui est supérieur à zéro, augmenter le premier paramètre lorsque la course augmente ; et/ou
en réponse au second paramètre qui est supérieur à zéro, augmenter le second paramètre lorsque la course augmente.

13. Procédé de commande selon l'une quelconque des revendications 7 à 11, dans lequel l'étape pour commander, selon le signal de commande, le second freinage sur l'équipement mobile par la seconde partie de freinage (62, 72) comprend les étapes suivantes :
commander la seconde partie de freinage (62, 72) pour déterminer, selon le signal de commande, une durée de blocage et une durée d'entraînement de la partie d'entraînement dans une période de temps prédéterminée ;
commander la partie d'entraînement pour arrêter l'entraînement dans les limites de la durée de blocage.
